(19) **Europäisches Patentamt**
**European Patent Office**
**Office européen des brevets**

(11) **EP 4 478 812 B1**

(12) **EUROPEAN PATENT SPECIFICATION**

(45) Date of publication and mention
of the grant of the patent:
**06.05.2026 Bulletin 2026/19**

(21) Application number: **22930335.9**

(22) Date of filing: **11.03.2022**

(51) International Patent Classification (IPC):
*H04W 74/0808* (2024.01)  *H04W 72/0446* (2023.01)
*H04W 72/25* (2023.01)  *H04W 72/02* (2009.01)
*H04W 92/18* (2009.01)

(52) Cooperative Patent Classification (CPC):
**H04W 74/0808; H04W 72/02; H04W 72/0446;**
**H04W 72/25; H04W 92/18**

(86) International application number:
**PCT/CN2022/080358**

(87) International publication number:
**WO 2023/168697 (14.09.2023 Gazette 2023/37)**

(54) **SIDELINK TRANSMISSION METHOD, APPARATUS AND MEDIUM**

VERFAHREN, VORRICHTUNG UND MEDIUM ZUR SIDELINK-ÜBERTRAGUNG

PROCÉDÉ, APPAREIL ET SUPPORT DE TRANSMISSION DE LIAISON LATÉRALE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**18.12.2024 Bulletin 2024/51**

(60) Divisional application:
**26168546.5**

(73) Proprietor: **GUANGDONG OPPO MOBILE**
**TELECOMMUNICATIONS**
**CORP., LTD.**
**Dongguan, Guangdong 523860 (CN)**

(72) Inventors:
• **ZHAO, Zhenshan**
**Dongguan, Guangdong 523860 (CN)**
• **MA, Teng**
**Dongguan, Guangdong 523860 (CN)**

(74) Representative: **Novagraaf Technologies**
**2 rue Sarah Bernhardt**
**CS90017**
**92665 Asnières-sur-Seine Cedex (FR)**

(56) References cited:
**EP-A1- 4 044 745      WO-A1-2021/026703**
**WO-A1-2021/081700      WO-A1-2021/088028**
**WO-A1-2021/088055      WO-A1-2021/195960**
**WO-A1-2021/255673      CN-A- 110 891 314**
**CN-A- 111 615 854      CN-A- 113 228 809**
**US-A1- 2021 092 783      US-A1- 2021 195 649**
**US-A1- 2022 263 613**

• **ASUSTEK: "Discussion on partial sensing and**
**SL DRX impact", vol. RAN WG1, no. e-Meeting;**
**20210816 - 20210827, 6 August 2021**
**(2021-08-06), XP052033770, Retrieved from the**
**Internet <URL:https://ftp.3gpp.org/tsg_ran/**
**WG1_RL1/TSGR1_106-e/Docs/R1-2108096.zip**
**R1-2108096 Discussion on partial sensing and**
**SL DRX impact.docx> [retrieved on 20210806]**

## Description

### TECHNICAL FIELD

The present disclosure relates to the technical field of sidelink communications, and in particular, relates to a method and apparatus for sidelink communication, and a medium thereof.

### BACKGROUND

A sidelink (SL) transmission mode is introduced to achieve direct communications between terminals in a vehicle-to-everything (V2X) system.

WO2021/081700AI discloses a data sending and receiving method and apparatus, capable of being applied to communication systems, such as V2X, LTE-V, V2V, Internet of Vehicles, MTC, Internet of Things (IoT), LTE-M, and M2M. A network device may configure a resource of an unlicensed spectrum sidelink for a first terminal device, and send the resource of the unlicensed spectrum sidelink to the first terminal device by means of indication information, so that the first terminal device may perform channel monitoring on the unlicensed spectrum sidelink according to the configuration of the network device, and determine, according to a result of channel monitoring, whether data is sent to a second terminal device on the unlicensed spectrum sidelink; exemplarily, under a condition that the result of channel monitoring is success of monitoring, the first terminal device sends the data to the second terminal device on the unlicensed spectrum sidelink, i.e., by means of combining the indication of the network device and the channel monitoring of the terminal device, the first terminal device can send the data to the second terminals device on the unlicensed spectrum sidelink.

WO2021/088028AI discloses a resource configuration method and apparatus, which can improve resource utilization during D2D communication. A first terminal device receives scheduling information that is sent by a network device and that is used to indicate uplink time-frequency resources used for the first terminal device. When sending a sidelink signal, when a the value of sidelink interference signal to the second network terminal device complies with a first rule, the uplink time-frequency resource can be multiplexed to send the sidelink signal to a second terminal device. Therefore, multiplexing the uplink time-frequency resource of the first terminal device under the premise of considering interference when performing sidelink transmission can increase the utilization rate of resources.

XP052033770 discloses a discussion on partial sensing and SL DRX Impact.

### SUMMARY

Embodiments of the present disclosure provide a method and apparatus for sidelink communication, and a medium thereof. The technical solutions are as follows. The invention is defined by the appended set of claims.

According to some embodiments of the present disclosure, a method for sidelink communication is provided. The method is applicable to a first terminal. The first terminal performs the sidelink communication using an unlicensed spectrum, and the method includes:

performing sidelink transmission in a first time-domain unit in response to a transmission condition being satisfied, wherein the transmission condition includes the following items: the first terminal is provided with granted transmission resources in the first time-domain unit, and channel access performed by the first terminal before the first time-domain unit is successful; and in a case that the first time-domain unit is within channel occupancy time initiated by a third terminal, the transmission condition further comprises that the third terminal is a destination receiver of sidelink data for transmission by the first terminal. In a case that the transmission condition is met, a destination identifier of sidelink control information (SCI) transmitted in the sidelink transmission is determined based on a service type in a case that the first terminal performs the sidelink transmission in a broadcast mode, wherein a service corresponding to the service type is a service to be received by the third terminal.

According to some embodiments of the present disclosure, an apparatus for sidelink communication is provided. The apparatus includes:

a sidelink transmission module, configured to perform sidelink transmission in a first time-domain unit in response to a transmission condition being satisfied, wherein the transmission condition includes the following items: the apparatus is provided with granted transmission resources in the first time-domain unit, and channel access performed by the apparatus before the first time-domain unit is successful; and in a case that the first time-domain unit is within channel occupancy time initiated by a third terminal, the transmission condition further comprises that the third terminal is a destination receiver of sidelink data for transmission by the first terminal. In a case that the transmission condition is satisfied, a destination identifier of SCI transmitted in the sidelink transmission is determined based on a service type in a case that the apparatus performs the sidelink transmission in a broadcast mode, wherein a service corresponding to the service type is a service to be received by the third terminal.

According to some embodiments of the present disclosure, a computer-readable storage medium is provided. The computer-readable storage medium stores at least one instruction, at least one program, a code set, or an instruction set. The at least one instruction, the at least one program, the code set, or the instruction set, when loaded and executed by a processor, causes the processor to perform the method for sidelink communication in the above embodiments.

It is understandable that the above general descriptions and details hereinafter are exemplary and illustrative, and are not construed as any limitation to the present disclosure.

## BRIEF DESCRIPTION OF DRAWINGS

For clearer descriptions of the technical solutions according to the embodiments of the present disclosure, the following briefly introduces the accompanying drawings required for describing the embodiments. Apparently, the accompanying drawings in the following description show merely some embodiments of the present disclosure, and persons of ordinary skill in the art may still derive other drawings from these accompanying drawings without creative efforts.

FIG. 1 is a block diagram of a sidelink communication system;

FIGS. 2 to 4 are schematic diagrams of three scenarios of sidelink transmission;

FIG. 5 is a schematic diagram of a scenario of sidelink transmission including a central control node;

FIG. 6 is a schematic diagram of a frame structure of sidelink transmission within a slot;

FIG. 7 is a schematic diagram of a listen before talk (LBT) mode in different transmission scenarios;

FIG. 8 is a schematic diagram of a time frequency resource of a fixed frame period (FFP);

FIG. 9 is a flowchart of a method for sidelink communication according to some embodiments of the present disclosure;

FIG. 10 is a schematic diagram of channel access immediately before a first time-domain unit;

FIG. 11 is a schematic diagram of channel access immediately before a first time-domain unit;

FIG. 12 is a schematic diagram of time frequencies of channel occupancy time and an idle duration in a symbol level;

FIG. 13 is a block diagram of an apparatus for sidelink communication according to some embodiments of the present disclosure; and

FIG. 14 is a schematic structural diagram of a terminal.

## DETAILED DESCRIPTION

Exemplary embodiments are described in detail herein, which are illustrated in the accompany drawings. In the case that the description below relates to accompany drawings, the same reference numerals in different accompany drawings indicate the same or similar elements, unless otherwise indicated. The implementations described in the following exemplary embodiments do not represent all embodiments consistent with the present disclosure, and are merely examples of apparatuses and methods detailed in the attached claims and consistent with aspects of the present disclosure.

The V2X is a key technology in future smart transportation system, and is mainly aimed at researching vehicle data transmission schemes of the 3rd Generation Partnership Project (3GPP) communication protocol. V2X communications include vehicle-to-vehicle (V2V) communications, vehicle-to-infrastructure (V2I) communications, vehicle-to-people (V2P) communications, and the like. V2X applications improve driving safety, reduce congestion and vehicle energy consumption, increase traffic efficiency, and the like. The V2X belongs to device-to-device (D2D) communications.

The D2D communications allow direct communication between different terminals.

The sidelink communication is a communication mode introduced in a D2D application scenario and extended and enhanced in the V2X system. The sidelink is a new type of a link introduced for supporting direct communication between devices, and has a higher spectral efficiency and a low transmission delay. Compared with Uu interface communication, the sidelink communication has short delay, low overhead, and the like, and thus is suitable for direct communication between a vehicle-mounted device and other peripheral devices at near geographical locations. The sidelink communication in the present disclosure supports all scenarios applicable to the sidelink communication, for example, at least one of the D2D or the V2X.

With the development of the 5th generation (5G) mobile communication technology, services and scenarios of the new V2X communication are supported using the 5G new radio (NR) technology in R16 of 3GPP, for example, vehicles platooning, extended sensors, advanced driving, remote driving, and the like. In general, a 5G V2X provides a higher communication rate, a shorter communication delay, and a more reliable communication quality.

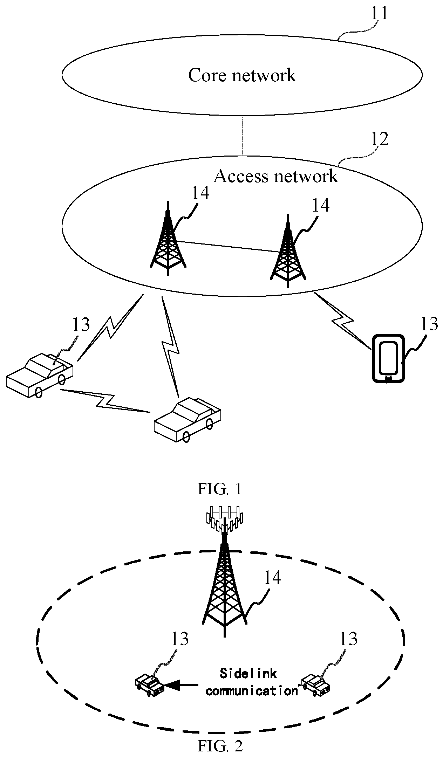

FIG. 1 is a block diagram of a sidelink communication system according to some embodiments of the present disclosure. The sidelink communication system includes a core network 11, an access network 12, and a terminal 13.

The core network 11 includes several core network devices. Each of the core network devices mainly functions to provide user connection and carry user management and service, and is determined as a carrying network for providing an interface to an external network. For example, the core network of the 5G NR system includes an access and mobility management function (AMF) entity, a user plane function (UPF) entity, a session management function (SMF) entity, and other devices.

The access network 12 includes several access network devices 14. The access network in the 5G NR system is also referred to as a new generation-radio access network (NG-RAN). The access network device 14 is a device deployed in the access network 12 and configured to provide a wireless communication function for the terminal 13. The access network device 14 includes various types of macro base stations, micro base stations, relay stations, access points, and the like. In systems using different radio access technologies, names of the devices with the access network device function are different, for example, referred to as the 5G base stations (next generation NodeBs, gNodeBs, or gNBs) in 5G NR systems. With the evolution of communications technologies, the name "access network device" changes. For convenient description, the above devices providing the wireless communication function for the terminal 13 are collectively referred to as the access network device in the embodiments of the present disclosure.

Generally, a plurality of terminals 13 are provided. One or more terminals 13 are disposed in a cell managed by each of the access network devices 14. The terminal 13 includes various handheld devices, vehicle-mounted devices, wearable devices, computing devices or other processing devices connected to wireless modems, various forms of user devices, mobile stations (MS), and other devices with the wireless communication function. For convenient description, the above devices are collectively referred to as the terminal. The access network device 14 and the core network device communicate with each other using the air interface technology, such as the NG interface in the 5G NR system. The access network device 14 and the terminal 13 communicate with each other using the air interface technology, such as a Uu interface.

The terminal 13 and the terminal 13, for example, the vehicle-mounted device and other devices (such as other vehicle-mounted devices, mobile phones, road side units (RSU), or the like), communicate with each other over a direct communication interface (for example, a PC5 interface), and the communication link over the direct communication interface is accordingly referred to as a direct link or sidelink. The sidelink communication indicates that the direct communication data transmission between the terminals is achieved over the SL, and is different from the traditional cellular system in which the communication data is received or transmitted over the access network device. Thus, the sidelink communication has the characteristics of short delay and low overhead, and is suitable for the communication between two terminals at near geographical locations (such as a vehicle-mounted device and other peripheral devices at near geographical locations). It should be noted that in FIG. 1, only the vehicle-to-vehicle communication in the V2X scenario is taken as an example, and the sidelink technology is applicable to the scenario where various terminals directly communicate with each other. In other words, the terminal in this application refers to any type of equipment that achieves communication using the sidelink technology. In other words, the terminal in the present disclosure is any device carrying out the communication using the sidelink technology.

The "5G NR system" in the embodiments of the present disclosure is also referred to as a 5G system or a NR system, and those skilled in the art can understand the meaning. The technical solutions in the embodiments of the present disclosure are applicable to the 5G NR system and evolved systems of the 5G NR system.

The user equipment (UE) in the embodiments of the present disclosure has the same meaning as the terminal, and the UE and the terminal are exchangeable. The network side in the embodiments of the present disclosure may be construed as at least one of an access network, a core network, an access network device, or a core network device.

The sidelink communication is categorized into sidelink communication within the network coverage, sidelink communication partially within the network coverage, and sidelink communication outside the network coverage based on network coverage of the communicated terminal.

FIG. 2 is a schematic diagram of a network architecture of sidelink communication within the network coverage. All terminals 13 in sidelink communication are within a coverage range of the same access network device 14, and all terminals 13 achieve the sidelink communication based on the same sidelink configuration by receiving the configuration signaling of the access network device 14.

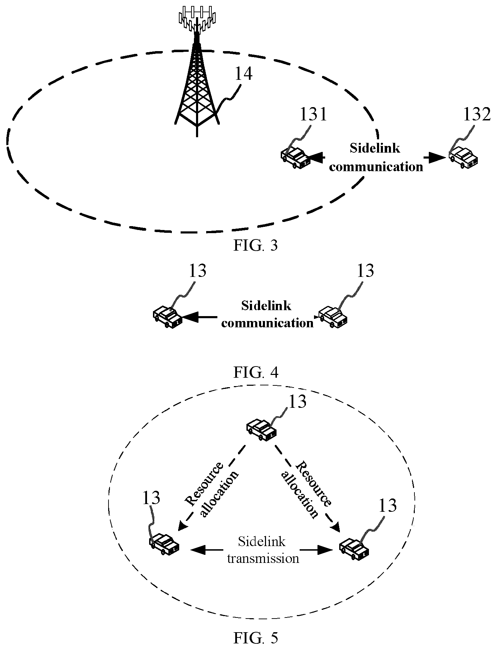

FIG. 3 is a schematic diagram of a network architecture of sidelink communication partially within the network coverage. A first terminal 131 in sidelink communication is within a coverage range of the station, and the first terminal 131 achieves the sidelink communication based on the configuration of the access network device 14 by receiving the configuration signaling of the access network device 14. A third terminal 132 beyond the network coverage range fails to receive the configuration signaling of the access network device 14. In this case, the third terminal 132 beyond the network coverage range determines the sidelink configuration and achieves the sidelink communication based on pre-configuration information and information carried in a physical sidelink broadcast channel (PSBCH) transmitted by the first terminal 131 within the network coverage range.

FIG. 4 is a schematic diagram of a network architecture of sidelink communication outside the network coverage. All terminals 13 in sidelink communication are beyond the network coverage range, and all terminals 13 determine the sidelink configuration and achieve the sidelink communication based on the pre-configuration information.

In FIG. 5, for sidelink communication including the central control node, a plurality of terminals 13 form a communication group. The communication group includes the central control node, and thus is a group header (CH) terminal. The central control node establishes the communication group, manages joining and leaving of group members, coordinates resources, allocates sidelink transmission resources to other terminals, receives sidelink feedback information from other terminals, coordinates resources with other communication groups, and the like.

For the sidelink communication, two transmission modes are defined in 3GPP: a first mode and a second mode.

In the first mode (also referred to as a mode A, a mode 1, a mode 3, or a station scheduling mode), transmission resources of the terminal are allocated by the access network device (such as the station), and the terminal transmits communication data in the sidelink over the transmission resources allocated by the access network device. The access network device allocates transmission resources of one transmission process, also referred to as a dynamically allocated sidelink transmission resource, for the terminal; or the access network device allocates transmission resources of semi-static transmission, also referred to as a semi-statically allocated sidelink transmission resource, for the terminal.

In the second mode (also referred to as a mode B, a mode 2, a mode 4, or a resource autonomous selection mode of the UE), the terminal autonomously selects transmission resources from a preconfigured resource pool or a resource pool configured on the network side, and transmits the communication data. Specifically, the terminal selects the transmission resources from the resource pool by sensing, or selects the transmission resources from the resource pool in a random selection mode.

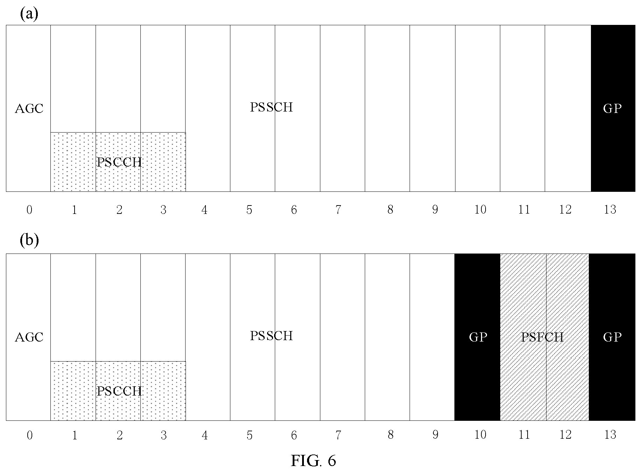

In the NR-V2X, a frame structure of a slot is shown in FIG. 6. FIG. 6(a) shows a slot structure not including the physical sidelink feedback channel (PSFCH), and FIG. 6(b) shows a slot structure including the PSFCH.

A physical sidelink control channel (PSCCH) in the NR-V2X starts from a second sidelink symbol of a slot in a time domain, and occupies two or three orthogonal frequency-division multiplexing (OFDM) symbols, and {10, 12 15, 20, 25} physical resource blocks (PRBs) in a frequency domain. Symbols and PRBs that are required for transmission of only one PSCCH are allowed to be configured in a resource pool to reduce the complexity of blind detection of the PSCCH by the terminal. In addition, since a sub-channel is a minimum unit in allocating physical sidelink shared channel (PSSCH) resources in the NR-V2X, the number of PRBs occupied by the PSCCH needs to be less than or equal to the number of PRBs in the sub-channel in the resource pool to avoid additional limitation on selection or allocation of the PSSCH resources. The PSSCH also starts from the second sidelink symbol of the slot in a time domain, a last time-domain symbol of the slot is a guard period (GP) symbol, and other symbols are defined for mapping the PSSCH. A first sidelink symbol of the slot is repetition of a second sidelink symbol, a receiver terminal generally uses the first sidelink symbols as an automatic gain control (AGC) symbol, and data in the symbol generally is not used for data demodulation. The PSSCH occupies K sub-channels in the frequency domain, and each sub-channel includes N continuous PRBs, as shown in FIG. 6(a).

In the case that the slot includes the PSFCH, a second-to-last symbol and a third-to-last symbol in the slot are used for PSFCH transmission, and a time-domain symbol prior to the PSFCH is used as the GP symbol, as shown in FIG. 6(b).

Unlicensed spectrum

The unlicensed spectrum is a spectrum set by countries and regions that can be used for radio device communications, and is generally considered as a shared spectrum. That is, communication devices in different communication systems use the spectrum as long as the regulatory requirements set by the countries or regions on the spectrum are satisfied, without applying for proprietary spectrum grant from the government.

Transmission structure in a new radio unlicensed (NR-U) system

Signal transmission in the NR-U spectrum (or shared spectrum) includes the following concepts.

Maximum channel occupancy time (MCOT) indicates a maximum duration for performing signal transmission using a channel of the NR-U spectrum upon success of LBT, and different channel access priority have different MCOT. A maximum value of the current MCOT is 10 ms. It is understandable that the MCOT is a duration occupied by signal transmission.

Channel occupancy time (COT) indicates a duration for performing signal transmission using a channel of the NR-U spectrum upon success of LBT, and the channel occupied by the signal within the duration may be not continuous. A maximum value of the COT is not greater than 20 ms, and a duration occupied by signal transmission within the COT is not greater than the MCOT.

COT of the network device (that is, a station) (gNB-initiated COT) is also referred to as the COT initiated by the network device, and indicates COT acquired upon success of LBT of the network device. The gNB-initiated COT is used in downlink transmission, and is also used for the UE in uplink transmission in the case that a condition is satisfied.

COT of the UE (UE-initiated COT) is also referred to as the COT initiated by the UE, and indicates COT acquired upon success of LBT of the UE.

A downlink transmission burst (DL burst) indicates a set of downlink transmissions (that is, including one or more downlink transmissions) performed by the network device, and the set of downlink transmissions is continuous transmissions (that is, no period between a plurality of downlink transmissions), or a period is present between the set of downlink transmissions and is less than or equal to 16 $\mu$s. In the case that a period between two downlink transmissions performed by the network device is greater than 16 $\mu$s, the two downlink transmissions belong to two DL bursts.

An uplink transmission burst (UL burst) indicates a set of uplink transmissions (that is, including one or more uplink transmissions) performed by the UE, and the set of uplink transmissions is continuous transmissions (that is, no period is present between a plurality of uplink transmissions), or a period is present between the set of uplink transmissions and is less than or equal to 16 $\mu$s. In the case that a period between two uplink transmissions performed by the UE is greater than 16 $\mu$s, the two uplink transmissions belong to two UL bursts.

In the case that the network device initiates the COT, resources in the COT are used for the UE to perform the uplink transmission.

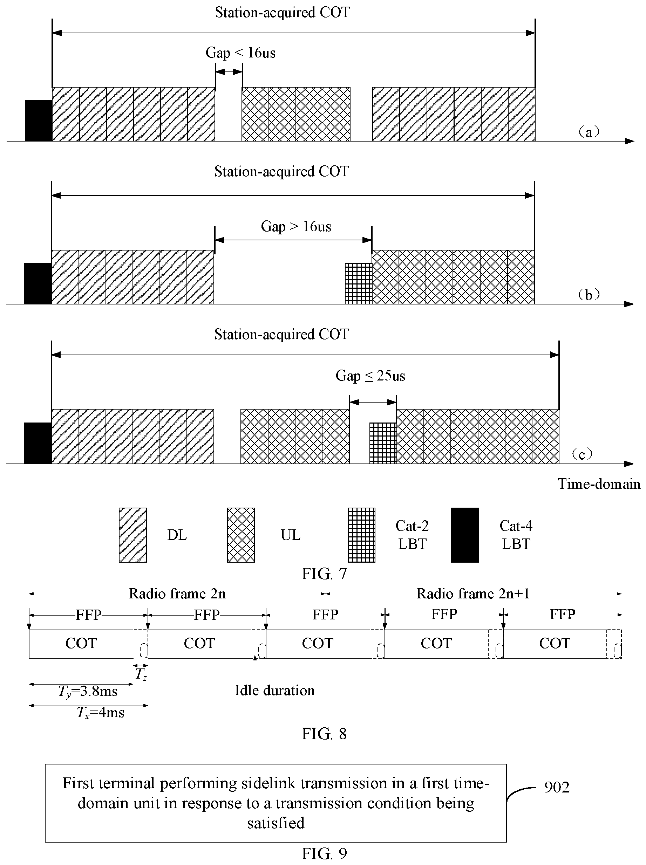

As shown in FIG. 7(a), for the UL burst within the gNB-initiated COT, in the case that a period between a start position of the UL burst and an end position of the DL burst is less than 16 $\mu$s, the UE immediately performs the uplink transmission (or referred to as Cat-1 LBT).

As shown in FIG. 7(b), in the case that no DL burst is subsequent to the UL burst within the gNB-initiated COT, the UE performs Cat-2 LBT prior to transmission.

As shown in FIG. 7(c), in the case that a period between any two adjacent transmissions is less than or equal to 25 $\mu$s, the UE performs Cat-2 LBT.

The Cat-1 LBT indicates that the communication device does not perform channel detection and performs transmission (that is, Type 2C channel access) upon the period; the Cat-2 LBT indicates that the communication device single-slot channel detection, and specifically, the Cat-2 LBT includes 25 $\mu$s single-slot channel detection (that is, Type 2A channel access) and 16 $\mu$s single-slot channel detection (that is, Type 2B channel access). For the UL burst within the gNB-initiated COT, in the case that the period between the start position of the UL burst and the end position of the DL burst is 16 $\mu$s, the UE performs 16 $\mu$s Cat-2 LBT prior to the uplink transmission; in the case that the period between the start position of the UL burst and the end position of the DL burst is 25 $\mu$s, the UE performs 25 $\mu$s Cat-2 LBT prior to the uplink transmission. The network device determines a size of the period between the start position of the UL burst and the end position of the DL burst, and transmits size information of the period or corresponding LBT mode to the terminal device.

It is understandable the network device acquires the COT by a channel access mode of load-based equipment (LBE), that is, the communication device performs the LBT in the unlicensed spectrum upon arrival of the service, and transmits service data (signal) upon success of the LBT; or, the network device acquires the COT by a channel access mode of frame-based equipment (FBE), that is, the communication device periodically performs the LBT in the unlicensed spectrum.

The NR-U system supports a channel access mechanism of the LBT, and additionally supports a channel access mechanism of the FBE. In the channel access mechanism of the FBE, also referred to as a semistatic channel access mode, the frame structure is periodic. That is, channel resources for the service transmission by the communication device are periodic. One frame structure includes at least one fixed frame period (FFP). Each FFP includes the COT and an idle duration. The FFP ranges from 1 ms to 10 ms, the COT in the FFP is not greater than 95% of the FFP, the idle duration is at least 5% of the FFP, a minimum value of the idle duration is 100 $\mu$s, and the idle duration is at an end of the FFP.

The communication device performs a fixed-length LBT monitoring a slot on the channel within the idle duration. In the case that the LBT is successful, COT within a next FFP may be used to transmit signals; and in the case that the LBT fails, the COT within the next FFP may not be used to transmit signals.

The semi-static channel access mode is configured by the station based on system information or highlayer parameters. In the case that a serving cell is configured by the station as a semi-static channel access mode, an FFP of the serving cell is Tx, a maximum value of the COT in the FFP of the serving cell is Ty, and an idle duration in the FFP of the serving cell is Tz. The value Tx of the FFP configured by the station is 1 ms, 2 ms, 2.5 ms, 4 ms, 5 ms, or 10 ms. The UE determines Ty and Tz based on Tx. Specifically, starting from an even numbered wireless frame, the UE determines a start position of each FFP based on $x \cdot Tx$ within each two continuous wireless frames. $x \in \{0, 1, ..., 20/TX-1\}$, a maximum COT value in the FFP is $Ty=0.95 \cdot Tx$, and the idle time length in the FFP is at least $Tz=\max(0.05 \cdot Tx, 100 \mu s)$.

As shown in FIG. 8, assuming that a period value of the FFP is 4 ms, $x \in \{0, 1, 2, 3, 4\}$ is determined based on $x \in \{0, 1, ..., 20/TX-1\}$ after the UE receives that the value Tx of the FFP configured by the station is 4 ms, and then the UE determines that a start position of each FFP within each two continuous wireless frames is 0 ms, 4 ms, 8 ms, 12 ms, or 10 ms. In each FFP, a maximum value Ty of the COT is 3.8 ms, and a value Tz of the idle period is 0.2 ms.

Channel access types (or LBT modes) in the NR-U system

Type 1 channel access indicates channel detection of random backoff multiple slots adjusted based on a size of a competitive window, and $T_{mcot}$ channel occupancy is initiated based on a channel access priority p. The station uses a type 1 LBT mode to transmit data thereof and share the COT to the UE, and the UE uses the type1 LBT mode to transmit data thereof and share the COT to the station. The following Table shows channel access priorities and corresponding channel access parameters in the case that the terminal performs the Type 1 channel access.

Table 1 Channel access parameters corresponding to different channel priorities

| channel access priority (p) | $m_p$ | $CW_{min,p}$ | $CW_{max,p}$ | $T_{mcot,p}$ | Allowed $CW_p$ value |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

It should be noted that in Table 1, mp represents the number of backoff slots corresponding to the channel access priority, CWp represents the size of the competitive window corresponding to the channel access priority, CWmin,p represents a minimum value of CWp corresponding to the channel access priority, CWmax,p represents a maximum value of CWp corresponding to the channel access priority, and Tmcot,p represents a maximum COT corresponding to the channel access priority. In the four channel access priorities in Table 1, p=1 is a highest priority.

In the case that the station initiates the COT, resources in the COT are used for the downlink transmission, and are shared with the UE for the uplink transmission. In the case that the resources in the COT are shared with the UE for uplink transmission, the channel access mode used by the UE is the Type 2A channel access, the Type 2B channel access, or the Type 2C channel access. The Type 2A channel access, the Type 2B channel access, and the Type 2C channel access are channel access modes based on monitoring slots with fixed durations.

In the Type 2A channel access (Cat-2 LBT, 25 $\mu$s), a channel detection mode of the UE is 25 $\mu$s single-slot channel detection. Specifically, in the Type 2A channel access, the UE performs 25 $\mu$s channel monitoring prior to transmission, and performs transmission upon success of the channel monitoring.

In the Type 2B channel access (Cat-2 LBT, 16 $\mu$s), a channel detection mode of the UE is 16 $\mu$s single-slot channel detection. Specifically, in the Type 2B channel access, the UE performs 16 $\mu$s channel monitoring prior to transmission, and performs transmission upon success of the channel monitoring. A period between a start position of the transmission and an end position of previous transmission is 16 $\mu$s.

In the Type 2C channel access (Cat-1 LBT), the UE does not perform channel detection and performs transmission upon the period. Specifically, in the Type 2C channel access, the UE directly performs the transmission. A period between a start position of the transmission and an end position of previous transmission is less than or equal to 16 $\mu$s. The transmission is not greater than 584 $\mu$s.

Some practices provide related technologies of performing sidelink transmission using a licensed spectrum. However, how to perform sidelink transmission using an unlicensed spectrum is an urgent technical problem to be resolved.

FIG. 9 is a flowchart of a method for sidelink communication according to some embodiments of the present disclosure. The method is applicable to a first terminal. The first terminal is a terminal supporting sidelink transmission, and is a terminal performing the sidelink communication using an unlicensed spectrum. The method includes the following processes.

In S902, a first terminal performs sidelink transmission in a first time-domain unit in response to a transmission condition being satisfied.

Condition 1: the first terminal is provided with granted transmission resources in the first time-domain unit; and
Condition 2: channel access performed by the first terminal before the first time-domain unit is successful.

The first time-domain unit is at least one of a radio frame, a sub-frame, a slot, a sub-slot, a symbol set, or a symbol. The embodiments are illustrated by taking the first time-domain unit being the slot as an example.

## For Condition 1

The granted transmission resources are transmission resources allocated by the network device or the network side to the first terminal. For example, in the case that the first terminal operates in a first mode (that is, the network side allocates sidelink transmission resources) of the sidelink communication, the granted transmission resources are sidelink transmission resources allocated by the network side to the first terminal in a dynamic allocation mode; or, the granted transmission resources are sidelink transmission resources allocated by the network side to the first terminal in a sidelink configured grant mode.
The granted transmission resources may also be transmission resources autonomously selected by the first terminal. For example, in the case that the first terminal operates in a second mode (that is, the terminal autonomously selects sidelink transmission resources) of the sidelink communication, the granted transmission resources are transmission resources selected or reserved by the first terminal based on sensing.
The granted transmission resources may also be transmission resources allocated by a second terminal to the first terminal. For example, the second terminal is the CH terminal, and allocates the transmission resources in the initiated COT to the first terminal.

## For Condition 2

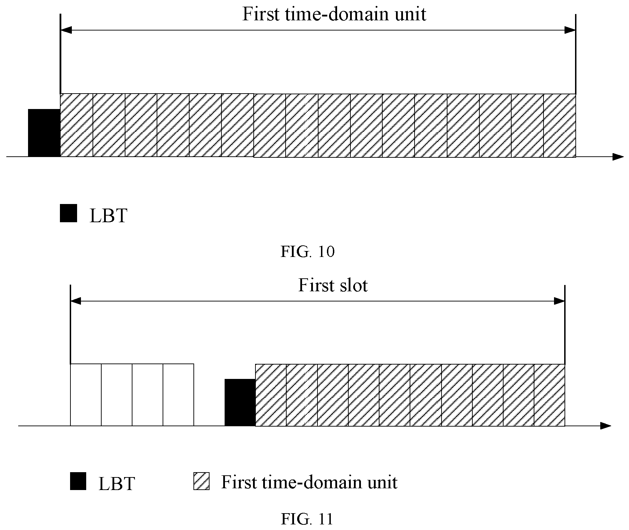

Types of the channel access performed by the first terminal before the first time-domain unit includes at least one of: Type 1 channel access, Type 2A channel access, Type 2B channel access, or Type 2C channel access. In the case that the first terminal uses the Type 2C channel access, the first terminal directly performs the sidelink transmission without sensing whether the channel is idle, and a duration of sidelink transmission performed by the first terminal is not greater than a first duration, for example, 585 $\mu$m.
The channel access performed by the first terminal before the first time-domain unit being successful includes that channel access immediately before the first time-domain unit is successful, as shown in FIG. 10 or FIG. 11. In FIG. 10, all or part of time-domain units in the first time-domain units are used for sidelink transmission. In FIG. 11, the first time-domain units are time-domain units corresponding to current sidelink transmission.
In some embodiments, in the case that the first time-domain unit is within the COT initiated by a third terminal, the first terminal performs the Type 2A channel access or the Type 2B channel access before the first time-domain unit. In the case that the first time-domain unit is not within the COT initiated by a third terminal, the first terminal performs the Type 1 channel access before the first time-domain unit.
Performing, by the first terminal, the sidelink transmission in the first time-domain unit includes: transmitting, by the first terminal, sidelink data (PSCCH/PSSCH) or sidelink feedback information (PSFCH) in the first time-domain unit.
In summary, in the method according to the embodiments, in the case that the first terminal is provided with the granted transmission resources, and the channel access performed by the first terminal before the first time-domain unit is successful, the first terminal performs the sidelink transmission in the first time-domain unit. Thus, the first terminal conditionally performed the sidelink transmission using the unlicensed spectrum, and the sidelink communication using the unlicensed spectrum is achieved.
In the embodiments based on FIG. 9, in the case that the first terminal uses the semi-static channel access mode, and parameter configuration of a channel access mode is semi-static, in addition to Condition 1 and Condition 2, the transmission condition further includes at least one of:

Condition 3: end time of the sidelink transmission is before start time of an idle duration in a current period;
Condition 4: a ratio of the number of first symbols to the number of second symbols is greater than or equal to a first threshold; or
Condition 5: the number of first symbols is greater than a second threshold.

The number of first symbols is the number of symbols corresponding to a duration between start time of the sidelink transmission and start time of an idle duration in a current period, and the number of second symbols is the number of symbols occupied by the sidelink transmission. In some embodiments, end time of the sidelink transmission is subsequent to the start time of the idle duration in the current period.

In some embodiments, the number of first symbols is the number of symbols corresponding to the duration between the start time of the sidelink transmission and the start time of the idle duration in the current period. For example, the start time of the sidelink transmission is $T_1$, the start time of the idle duration in the current period is $T_2$, an OFDM symbol duration is $T_{symb}$, the number of first symbols is M, and then:

$$M = \lceil (T_2 - T_1)/T_{symb} \rceil \quad \text{Formula 1}$$

or,

$$M = \lfloor (T_2 - T_1)/T_{symb} \rfloor \quad \text{Formula 2}$$

$\lceil \rceil$ represents round up to an integer, and $\lfloor \rfloor$ represents round down to an integer.

In some embodiments, the symbol corresponding to the sidelink transmission of the first terminal does not include a GP symbol upon the sidelink transmission.

In some embodiments, the first threshold or the second threshold is predefined or configured by a network device. For example, a sidelink bandwidth part includes parameters for configuring at least one of the first threshold and the second threshold. For example, the resource pool includes parameters for configuring at least one of the first threshold and the second threshold.

In some embodiments, a channel access model parameter is a high layer parameter "ChannelAccessMode." In the case that the high layer parameter "ChannelAccessMode" is configured as "semiStatic," the channel access mode based on the FBE is used. In conjunction with embodiments shown in FIG. 8, in each FFP, a maximum COT value Ty is 3.8 ms, and a value Tz of the idle duration is 0.2 ms. In the case that a sub-carrier space used in the sidelink transmission system is 15 kHz, 1 ms corresponds to a period, and a 4 ms period includes four periods. As first three slots in each FFP are complete slots and are all in the COT, the terminal performs the sidelink transmission using the three slots, whereas some symbols in the fourth slot are in the COT and other symbols are in the idle duration. As the idle duration is 0.2 ms, a duration corresponding to the idle duration is less than a duration corresponding to three symbols (a duration of one symbol is about 71 us, including the CP). That is, symbols #0 to #10 in the fourth slot are before the start time of the idle duration, and symbols #11 to #13 overlap with the idle duration. Therefore, whether the terminal performs the sidelink transmission using the slot is determined by the following methods.

**For Condition 3**

In the semi-static channel access mode, the time domain is divided into a plurality of FFPs. The current period is the FP of the first time-domain unit. The current period includes the COT and the idle duration. The COT is in a first half of the current period, and the idle duration is in a second half of the current period.

In the case that the end time of the sidelink transmission is before the start time of the idle duration in the current period, the first terminal is allowed to perform the sidelink transmission in the first time-domain unit. In the case that the end time of the sidelink transmission is subsequent to the start time of the idle duration in the current period, the first terminal is not allowed or is forbidden to perform the sidelink transmission in the first time-domain unit.

By taking the first time-domain unit as an example, the first time-domain unit corresponds to a last slot in the current FFP period. Assuming that PSFCH resources are configured in the slot, as shown in FIG. 6(b), the PSFCH occupies 12th and 13th symbols in the slot (corresponding to symbol indexes #11 and #12, respectively), and 11th and 14th symbols are GP and do not transmit data. Thus, the PSSCH in the slot occupies 1st to 10th symbols. In the case that the first terminal performs sidelink transmission (PSCCH/PSSCH) in the slot, the first terminal is allowed to perform the sidelink transmission in the slot as the end time of the sidelink transmission (corresponding symbolic index #9) is before the start time of the idle duration. For example, in the case that no PSFCH resource is configured in the slot, all symbols are used for PSSCH transmission. In the case that the first terminal tends to perform sidelink transmission (PSCCH/PSSCH) in the slot, the first terminal cannot perform sidelink transmission in the slot as the end time of the sidelink transmission is subsequent to the start time of the idle duration.

**For Condition 4**

In the case that the ratio of the number of first symbols to the number of second symbols is greater than or equal to the first threshold, the first terminal is allowed to perform the sidelink transmission in the first time-domain unit. In the case that the ratio of the number of first symbols to the number of second symbols is less than the first threshold, the first terminal is not allowed or is forbidden to perform the sidelink transmission in the first time-domain unit. The end time of the sidelink transmission is subsequent to the start time of the idle duration in the current period.

The first threshold is predefined, predetermined, or configured by a network device.

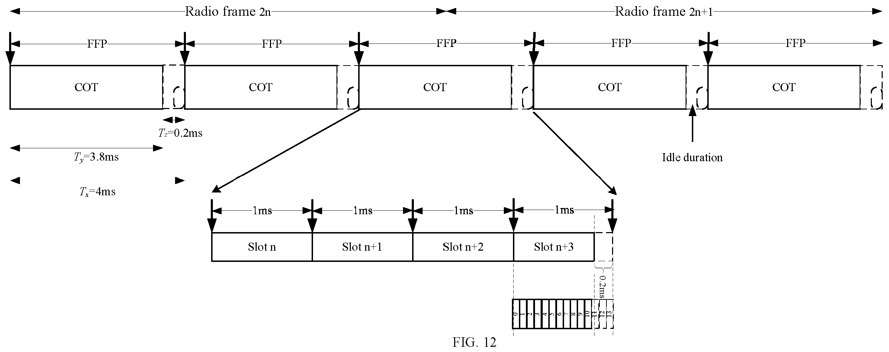

In some embodiments, the first threshold configured in the configuration parameters of the resource pool is 0.7. By taking the first time-domain unit being a slot as an example, the first time-domain unit corresponds to a last slot in the current FFP period. As shown in FIG. 12, no PSFCH resource is configured in the slot, all symbols are used for PSSCH transmission. In the case that the first terminal tends to perform sidelink transmission (PSCCH/PSSCH) in the slot, the first terminal is allowed to perform the sidelink transmission in the slot as the number of first symbols is 11 (by taking Formula 2 as an example), the number of second symbols is 13 (not including a last GP symbol), and the ratio ($11/13 \approx 0.84$) of the number of first symbols to the number of second symbols is greater than the first threshold 0.7.

**For Condition 5**

In the case that the number of first symbols is greater than or equal to the second threshold, the first terminal is allowed to perform the sidelink transmission in the first time-domain unit. In the case that the number of first symbols is less than the second threshold, the first terminal is not allowed or is forbidden to perform the sidelink transmission in the first time-domain unit. The end time of the sidelink transmission is subsequent to the start time of the idle duration in the current period.

The second threshold is predefined, predetermined, or configured by a network device.

In some embodiments, the second threshold configured in the configuration parameters of the resource pool is 0.7. By taking the first time-domain unit being a slot as an example, the first time-domain unit corresponds to a last slot in the current FFP period. As shown in FIG. 12, no PSFCH resource is configured in the slot, all symbols are used for PSSCH transmission. In the case that the first terminal tends to perform sidelink transmission (PSCCH/PSSCH) in the slot, the first terminal is allowed to perform the sidelink transmission in the slot as the number of first symbols (11 symbols) is greater than the second threshold.

In summary, in the method according to the embodiments, in the semi-static channel access mode, Condition 3/4/5 is added and is determined as the transmission condition of performing the sidelink transmission by the first terminal using the unlicensed spectrum, such that an impact of idle duration on the first terminal is avoided.

For Condition 3, in the case that the end time of the sidelink transmission is before the start time of the idle duration, the idle duration does not affect the current sidelink transmission. Thus, the terminal performs the current sidelink transmission to ensure that the idle duration does not affect the current sidelink transmission.

For Condition 4 or Condition 5, the end time of the sidelink transmission is subsequent to the start time of the idle duration, but there are many symbols used in the sidelink transmission. Even if the sidelink data is not transmitted on the symbol corresponding to the idle duration, the third terminal, as a receiver, can receive the sidelink data correctly. That is, the idle duration has little impact on the current sidelink transmission, and the sidelink transmission is performed normally. Then, the current sidelink transmission continues to ensure small transmission delay and improve transmission efficiency.

Based on FIG. 9, the first time-domain unit is in the COT initiated by the third terminal, in addition to Condition 1 and Condition 2, the transmission condition further includes:

Condition 6: The third terminal is a destination receiver of sidelink data for transmission by the first terminal.

In the case that the first time-domain unit is in the COT initiated by the third terminal, the first terminal is allowed to perform the sidelink transmission in the first time-domain unit in the case that the third terminal is a destination receiver of sidelink data for transmission by the first terminal, and the first terminal is not allowed or is forbidden to perform the sidelink transmission in the first time-domain unit in the case that the third terminal is not a destination receiver of sidelink data for transmission by the first terminal.

The third terminal transmits COT indication information upon initiating the COT. The COT indication information indicates information of COT occupied by the third terminal. The first terminal determines, based on the COT indication information, whether the COT is initiated by the third terminal. Alternatively, the first terminal determines, based on the COT indication information, which terminal initiates the COT.

In the case that the first terminal performs the channel access using Type 2A or Type 2B in the COT initiated by the third terminal, the sidelink data for transmission by the first terminal needs to be transmitted to the third terminal. Alternatively, in the case that the first terminal is in the COT initiated by the third terminal, and the sidelink data for transmission by the first terminal is transmitted to the third terminal, the first terminal performs the channel access using Type 2A or Type 2B; otherwise, the first terminal performs the channel access using Type 1.

The sidelink transmission supports a unicast mode, a groupcast mode, a broadcast mode, and other communication modes.

In the unicast mode, a destination receiver includes one third terminal, and a destination identifier (ID) of sidelink control information (SCI) from the first terminal is determined based on identification information of the destination receiver.

In the groupcast mode, a destination receiver of sidelink data transmitted by a transmitter end includes a group of third terminals, and the destination ID of the SCI from the first termina is determined based on a group identification or a service type.

In the broadcast mode, a destination receiver of sidelink data transmitted by a transmitter end includes all third terminal interested in the service type of the sidelink data, and the destination ID of the SCI from the first termina is determined based on a service type.

In the case that the first terminal performs the sidelink transmission in the unicast mode, the destination ID of the SCI transmitted in the sidelink transmission is determined based on identification information of the third terminal. That is, in the case that the first terminal performs the sidelink transmission in the first time-domain unit in the unicast mode, the destination ID of the SCI from the first terminal is determined based on the identification information of the third terminal. For example, SCI includes 16-bit destination identification information determined by the last 16 bits of identification information (24 bits) of the third terminal.

In the case that the first terminal performs the sidelink transmission in the groupcast mode, the destination ID of the SCI transmitted in the sidelink transmission is determined based on the group identification information or the service type. The group identification information indicates a communication group including the first terminal and the third terminal, and a service corresponding to the service type is a service to be received by the third terminal. That is, in the case that the first terminal performs the sidelink transmission in the first time-domain unit in the groupcast mode, the destination ID of the SCI from the first terminal is determined based on the group identification information or the service type. The communication group corresponding to the group identification information includes the first terminal and the third terminal.

In some embodiments, the first terminal acquires indication information from the third terminal, and determines the destination identification information based on the indication information. The indication information is carried by SCI or PC5-RRC signaling. For example, in the case that the first terminal and the third terminal perform unicast communication, the third terminal indicates the service type interested by the third terminal or the service type to be received by the third terminal to the first terminal using PC5-RRC. Alternatively, the third terminal transmits SCI to the first terminal, and the SCI indicates the service type corresponding to the sidelink data transmitted by the third terminal. the service type is generally the service type to be received by the third terminal or the service type interested by the third terminal.

For example, the first terminal receives the SCI from the third terminal. The destination identification information in the SCI includes the group identification information, the sidelink data for transmission by the first terminal in the first slot is also transmitted to a communication group corresponding to the group identification information. That is, the third terminal is a member of the communication group. The first terminal performs the sidelink transmission in the first slot. Furthermore, the first terminal carries the group identification information in the SCI.

For example, the first terminal receives the SCI from the third terminal. The destination identification information in the SCI corresponds to a first service type, and the sidelink data for transmission by the first terminal in the first slot also corresponds to the first service type. That is, the third terminal also receives data of the service type. The first terminal performs the sidelink transmission in the first slot. Furthermore, the first terminal carries the destination identification information corresponding to the first service type in the SCI.

In the case that the first terminal performs the sidelink transmission in the broadcast mode, the destination ID of the SCI transmitted in the sidelink transmission is determined based on the service type. The service corresponding to the service type is a service to be received by the third terminal. That is, in the case that the first terminal performs the sidelink transmission in the first time-domain unit in the broadcast mode, the destination ID of the SCI from the first terminal is determined based on the service type.

In summary, in the method according to the embodiments, in the case that the first time-domain unit is in the COT initiated by the third terminal, the first terminal performs the sidelink transmission in response to determining that the third terminal is the destination receiver of the sidelink data for transmission to avoid additional occupancy of the COT initiated by the third terminal by the sidelink data unrelated to the third terminal from the first terminal and thus unreasonable occupancy of unlicensed spectrum of the third terminal.

It should be noted that all or part of the Conditions 1 to 6 may also be combined into a new embodiment. For example, Conditions 1 to 6 are combined into a new embodiment. For example, Condition 1, Condition 2, Condition 3, and Condition 6 are combined into a new embodiment. For example, Condition 1, Condition 2, Condition 4, and Condition 6 are combined into a new embodiment. For example, Condition 1, Condition 2, Condition 5, and Condition 6 are combined into a new embodiment, which are content acquired based on the above description by those skilled in the art without doubt, and are thus no repeated in the present disclosure.

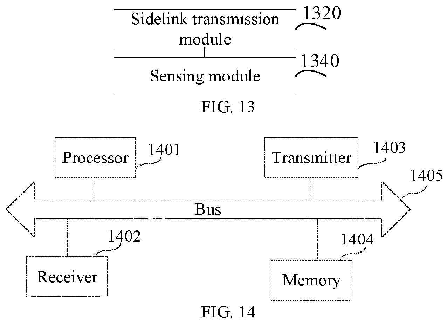

FIG. 13 is a block diagram of an apparatus for sidelink communication according to some embodiments of the present disclosure. The apparatus includes:

a sidelink transmission module 1320 (or referred to as a transmitting module), configured to perform sidelink transmission in a first time-domain unit in response to a transmission condition being satisfied,

wherein the transmission condition includes the following items: the apparatus is provided with granted transmission resources in the first time-domain unit, and channel access performed by the apparatus before the first time-domain unit is successful.

In some embodiments, the granted transmission resources include at least one of the following resources.

Transmission resources allocated by a network device to the apparatus. For example, in the case that the apparatus operates in a first mode (that is, the network side allocates sidelink transmission resources) of the sidelink communication, the granted transmission resources are sidelink transmission resources allocated by the network side to the first terminal in a dynamic allocation mode; or, the granted transmission resources are sidelink transmission resources allocated by the network side to the first terminal in a sidelink configured grant mode.

Transmission resources autonomously selected by the apparatus. For example, in the case that the apparatus operates in a second mode (that is, the terminal autonomously selects sidelink transmission resources) of the sidelink communication, the granted transmission resources are transmission resources selected or reserved by the first terminal based on sensing.

Transmission resources allocated by a second terminal to a first terminal. For example, the second terminal is the CH terminal, and allocates the transmission resources in the initiated COT to the first terminal.

In some embodiments, types of the channel access include at least one of:

Type 1 channel access, Type 2A channel access, Type 2B channel access, or Type 2C channel access.

In some embodiments, the apparatus further includes:

a sensing module 1340 (also referred to as a receiving module), configured to: perform the Type 2A channel access or the Type 2B channel access before the first time-domain unit in the case that the first time-domain unit is within channel occupancy time initiated by a third terminal; and perform the Type 1 channel access before the first time-domain unit in the case that the first time-domain unit is not within the channel occupancy time initiated by the third terminal.

In some embodiments, the sidelink transmission module 1320 is further configured to cause a duration for performing the sidelink transmission in the first time-domain unit to be not greater than a first duration in the case that the channel access is Type 2C channel access.

In some embodiments, the channel access being successful includes: channel access immediately before the first time-domain unit is successful; or, channel access immediately before the sidelink transmission in the first time-domain unit is successful.

In some embodiments, in the case that parameter configuration of a channel access mode is semi-static, the transmission condition further includes one of the following items:

end time of the sidelink transmission is before start time of an idle duration in a current period;
a ratio of the number of first symbols to the number of second symbols is greater than or equal to a first threshold, wherein the number of first symbols is a number of symbols corresponding to a duration between start time of the sidelink transmission and start time of an idle duration in a current period, and the number of second symbols is a number of symbols occupied by the sidelink transmission; or
the number of first symbols is greater than a second threshold;
wherein the current period is a period of the first time-domain unit.

For example, the start time of the sidelink transmission is $T_1$, the start time of the idle duration in the current period is $T_2$, an OFDM symbol duration is $T_{symb}$, the number of first symbols is M, and then:

$$M = \lceil (T_2 - T_1)/T_{symb} \rceil \quad \text{Formula 1}$$

or,

$$M = \lfloor (T_2 - T_1)/T_{symb} \rfloor \quad \text{Formula 2}$$

$\lceil \ \rceil$ represents round up to an integer, and $\lfloor \ \rfloor$ represents round down to an integer.

In some embodiments, the number of second symbols does not include a period symbol upon the sidelink transmission.

In some embodiments, the first threshold is predefined, predetermined, or configured by a network device.

In some embodiments, the second threshold is predefined, predetermined, or configured by a network device.

In the case that the first time-domain unit is within channel occupancy time initiated by a third terminal, the transmission condition further includes that:

the third terminal is a destination receiver of sidelink data for transmission by the apparatus.

In some embodiments, in the case that the transmission condition is satisfied:

a destination identifier of SCI transmitted in the sidelink transmission is determined based on identification information of the third terminal in the case that the apparatus performs the sidelink transmission in a unicast mode;

a destination identifier of SCI transmitted in the sidelink transmission is determined based on group identification information or a service type in the case that the apparatus performs the sidelink transmission in a groupcast mode, wherein the group identification information indicates a communication group including the apparatus and the third terminal, and a service corresponding to the service type is a service to be received by the third terminal; or

a destination identifier of SCI transmitted in the sidelink transmission is determined based on a service type in the case that the apparatus performs the sidelink transmission in a broadcast mode, wherein a service corresponding to the service type is a service to be received by the third terminal.

FIG. 14 is a schematic structural diagram of a UE according to some embodiments of the present disclosure. The UE includes: a processor 1401, a receiver 1402, a transmitter 1403, a memory 1404, and a bus 1405.

The processor 1401 includes one or more processing cores, and achieves various functional applications and information processing by running software programs and modules.

The receiver 1402 and the transmitter 1403 are practiced as a communication assembly, and the communication assembly is a communication chip. The communication assembly is configured to perform the sidelink transmission.

The memory 1404 is connected to the processor 1401 by the bus 1405.

The memory 1404 is configured to store one or more instructions; and the processor 1401, when loading and executing the one or more instructions, is caused to perform the method in the above method embodiments.

In addition, the memory 1404 is achieved by any type of volatile or non-volatile storage device or combinations thereof. The volatile or non-volatile storage device includes, but is not limited to: a disk or optical disc, an electrically-erasable programmable read-only memory (EEPROM), an erasable programmable read-only memory (EPROM), a static random-access memory (SRAM), a read-only memory (ROM), a magnetic memory, a flash memory, or a programmable read-only memory (PROM).

Some embodiments of the present disclosure further provide a non-transitory computer-readable storage medium including instructions, for example, a memory including one or more instructions. The one or more instructions, when loaded and executed by a processor of a UE, cause the processor to perform the method for sidelink communication. For example, the non-transitory computer-readable storage medium is a ROM, a compact disc read-only memory (CD-ROM), a magnetic tape, a floppy disk, an optical data storage device, or the like.

Some embodiments of the present disclosure further provide a non-transitory computer-readable storage medium. One or more instructions, when loaded and executed by a processor of a UE, cause the UE to perform the method for sidelink communication.

Some embodiments of the present disclosure further provide a computer-readable storage medium storing at least one instruction, at least one program, a code set, or an instruction set therein. The at least one instruction, the at least one program, the code set, or the instruction set, when loaded and executed by a processor, causes the processor to perform the method for sidelink communication in the above method embodiments.

Some embodiments of the present disclosure further provide a computer program product including one or more computer instructions therein. The one or more computer instructions are stored in a computer-readable storage medium. The one or more computer instructions, when loaded and executed by a processor of a computer device, causes the computer device to perform the method for sidelink communication in the above method embodiments.

It is understandable that the term "a plurality of" herein means two or more. The term "and/or" herein describes associations between associated objects, and indicates three types of relationships. For example, the phrase "A and/or B" means (A), (B), or, (A and B). The character "/" generally indicates that the associated objects are in an "or" relationship.

Other embodiments of the present application would be apparent to those skilled in the art from consideration of the specification and practice disclosed herein. The present disclosure is intended to cover any variations, uses, or adaptations of the present disclosure following the general principles thereof and including such departures from the present application as coming within common knowledge or customary technical means in the art. The description and the embodiments are only regarded as exemplary, and the true scope of the embodiments of the present disclosure are subject to the appended claims.

It is understandable that the present disclosure is not limited to the accurate structures described above and shown in the accompanying drawings, and various modifications and variations may be made without departing from the scope of the present disclosure. The scope of the present disclosure is only subject to the appended claims.

**Claims**

1. A method for sidelink communication, applicable to a first terminal, wherein the first terminal performs the sidelink communication using an unlicensed spectrum, and the method comprises:

   performing (902) sidelink transmission in a first time-domain unit in response to a transmission condition being satisfied, wherein the transmission condition comprises the following items: the first terminal is provided with granted transmission resources in the first time-domain unit, and channel access performed by the first terminal before the first time-domain unit is successful; and the method is **characterised in that**:
   in a case that the first time-domain unit is within channel occupancy time initiated by a third terminal, the transmission condition further comprises that the third terminal is a destination receiver of sidelink data for transmission by the first terminal;
   in a case that the transmission condition is met, a destination identifier of sidelink control information, SCI, transmitted in the sidelink transmission is determined based on a service type in a case that the first terminal performs the sidelink transmission in a broadcast mode, wherein a service corresponding to the service type is a service to be received by the third terminal.

2. The method according to claim 1, wherein the granted transmission resources comprise at least one of:

   transmission resources allocated by a network device to the first terminal; or
   transmission resources autonomously selected by the first terminal.

3. The method according to claim 1, wherein types of the channel access comprise at least one of: Type 1 channel access, Type 2A channel access, Type 2B channel access, or Type 2C channel access.

4. The method according to claim 3, further comprising:

   performing the Type 2A channel access or the Type 2B channel access before the first time-domain unit in a case that the first time-domain unit is within channel occupancy time initiated by the third terminal; and
   performing the Type 1 channel access before the first time-domain unit in a case that the first time-domain unit is not within the channel occupancy time initiated by the third terminal.

5. The method according to claim 1, wherein a duration for performing the sidelink transmission in the first time-domain unit by the first terminal is not greater than a first duration in a case that the channel access is Type 2C channel access.

6. The method according to claim 1, wherein the channel access being successful comprises:
   channel access immediately before the sidelink transmission in the first time-domain unit is successful.

7. The method according to any one of claims 1 to 6, wherein in a case that the transmission condition is met:

   a destination identifier of SCI transmitted in the sidelink transmission is determined based on identification information of the third terminal in a case that the first terminal performs the sidelink transmission in a unicast mode; or
   a destination identifier of SCI transmitted in the sidelink transmission is determined based on group identification information in a case that the first terminal performs the sidelink transmission in a groupcast mode, wherein the group identification information indicates a communication group comprising the first terminal and the third terminal.

8. An apparatus for sidelink communication, comprising:

   a sidelink transmission module (1320), configured to perform sidelink transmission in a first time-domain unit in response to a transmission condition being satisfied, wherein the transmission condition comprises the following items: the apparatus is provided with granted transmission resources in the first time-domain unit, and channel access performed by the apparatus before the first time-domain unit is successful; and
   the apparatus is **characterised in that**:

      in a case that the first time-domain unit is within channel occupancy time initiated by a third terminal, the transmission condition further comprises that the third terminal is a destination receiver of sidelink data for transmission by the apparatus;
in a case that the transmission condition is satisfied, a destination identifier of sidelink control information, SCI, transmitted in the sidelink transmission is determined based on a service type in a case that the apparatus performs the sidelink transmission in a broadcast mode, wherein a service corresponding to the service type is a service to be received by the third terminal.

9. The apparatus according to claim 8, wherein the granted transmission resources comprise at least one of:

transmission resources allocated by a network device to the apparatus; or
transmission resources autonomously selected by the apparatus.

10. The apparatus according to claim 8, wherein types of the channel access comprise at least one of: Type 1 channel access, Type 2A channel access, Type 2B channel access, or Type 2C channel access;
optionally, the apparatus further comprises: a sensing module (1340), configured to: perform the Type 2A channel access or the Type 2B channel access before the first time-domain unit in a case that the first time-domain unit is within channel occupancy time initiated by the third terminal; and perform the Type 1 channel access before the first time-domain unit in a case that the first time-domain unit is not within the channel occupancy time initiated by the third terminal.

11. The apparatus according to claim 8, wherein the sidelink transmission module (1320) is further configured to cause a duration for performing the sidelink transmission in the first time-domain unit to be not greater than a first duration in a case that the channel access is Type 2C channel access.

12. The apparatus according to claim 8, wherein the channel access being successful comprises: channel access immediately before the sidelink transmission in the first time-domain unit is successful.

13. The apparatus according to any one of claims 8 to 12, wherein in a case that the transmission condition is satisfied:

a destination identifier of SCI transmitted in the sidelink transmission is determined based on identification information of the third terminal in a case that the apparatus performs the sidelink transmission in a unicast mode; or
a destination identifier of SCI transmitted in the sidelink transmission is determined based on group identification information in a case that the apparatus performs the sidelink transmission in a groupcast mode, wherein the group identification information indicates a communication group comprising the apparatus and the third terminal.

14. A computer-readable storage medium, storing one or more programs, wherein the one or more programs, when loaded and run by a processor (1401), cause the processor (1401) to perform the method for sidelink communication as defined in any one of claims 1 to 7.

**Patentansprüche**

1. Verfahren zur Sidelink-Kommunikation, anwendbar auf ein erstes Endgerät, wobei das erste Endgerät die Sidelink-Kommunikation unter Verwendung eines unlizenzierten Spektrums durchführt, und das Verfahren umfasst:
Durchführen (902) einer Sidelink-Übertragung in einer ersten Zeitdomäneneinheit als Reaktion auf die Erfüllung einer Übertragungsbedingung, wobei die Übertragungsbedingung die folgenden Punkte umfasst: dem ersten Endgerät sind in der ersten Zeitdomäneneinheit gewährte Übertragungsressourcen bereitgestellt, und der Kanalzugriff, der durch das erste Endgerät vor der ersten Zeitdomäneneinheit durchgeführt wird, ist erfolgreich; und das Verfahren **dadurch gekennzeichnet ist, dass**:

falls sich die erste Zeitdomäneneinheit innerhalb der von einem dritten Endgerät initiierten Kanalbelegungszeit befindet, die Übertragungsbedingung weiter umfasst, dass das dritte Endgerät ein Zielempfänger von Sidelink-Daten zur Übertragung durch das erste Endgerät ist;
falls die Übertragungsbedingung erfüllt ist, eine Zielkennung der in der Sidelink-Übertragung übertragenen Sidelink-Steuerinformationen, SCI, anhand eines Diensttyps bestimmt wird, falls das erste Endgerät die Sidelink-Übertragung im Broadcast-Modus durchführt, wobei es sich bei dem Diensttyp um einen Dienst handelt, der vom dritten Endgerät empfangen werden soll.

**2.** Verfahren nach Anspruch 1, wobei die gewährten Übertragungsressourcen mindestens eines umfassen von:

Übertragungsressourcen, die von einer Netzwerkvorrichtung dem ersten Endgerät zugewiesen werden; oder Übertragungsressourcen, die vom ersten Endgerät autonom ausgewählt sind.

**3.** Verfahren nach Anspruch 1, wobei die Kanalzugriffsarten mindestens eines umfassen von: Kanalzugriff Typ 1, Kanalzugriff Typ 2A, Kanalzugriff Typ 2B oder Kanalzugriff Typ 2C.

**4.** Verfahren nach Anspruch 3, weiter umfassend:

Durchführen des Kanalzugriffs Typ 2A oder des Kanalzugriffs Typ 2B vor der ersten Zeitdomäneneinheit, falls sich die erste Zeitdomäneneinheit innerhalb der vom dritten Endgerät initiierten Kanalbelegungszeit befindet; und
Durchführen des Kanalzugriffs Typ 1 vor der ersten Zeitdomäneneinheit, falls sich die erste Zeitdomäneneinheit nicht innerhalb der vom dritten Endgerät initiierten Kanalbelegungszeit befindet.

**5.** Verfahren nach Anspruch 1, wobei die Dauer für die Durchführung der Sidelink-Übertragung in der ersten Zeitdomäneneinheit durch das erste Endgerät nicht länger ist als eine erste Dauer, falls der Kanalzugriff Kanalzugriff Typ 2C ist.

**6.** Verfahren nach Anspruch 1, wobei der erfolgreiche Kanalzugriff Folgendes umfasst:
der Kanalzugriff ist unmittelbar vor der Sidelink-Übertragung in der ersten Zeitdomäneneinheit erfolgreich.

**7.** Verfahren nach einem der Ansprüche 1 bis 6, wobei falls die Übertragungsbedingung erfüllt ist:

eine Zielkennung der in der Sidelink-Übertragung übertragenen SCI anhand der Identifikationsinformationen des dritten Endgeräts bestimmt wird, falls das erste Endgerät die Sidelink-Übertragung in einem Unicast-Modus durchführt; oder
eine Zielkennung der in der Sidelink-Übertragung übertragenen SCI anhand von Gruppenidentifikationsinformationen bestimmt wird, falls das erste Endgerät die Sidelink-Übertragung in einem Groupcast-Modus durchführt, wobei die Gruppenidentifikationsinformationen eine Kommunikationsgruppe angeben, die das erste Endgerät und das dritte Endgerät umfasst.

**8.** Einrichtung zur Sidelink-Kommunikation, umfassend:
ein Sidelink-Übertragungsmodul (1320), das so konfiguriert ist, dass es eine Sidelink-Übertragung in einer ersten Zeitdomäneneinheit durchführt, als Reaktion darauf, dass eine Übertragungsbedingung erfüllt ist, wobei die Übertragungsbedingung die folgenden Punkte umfasst: der Einrichtung sind in der ersten Zeitdomäneneinheit gewährte Übertragungsressourcen bereitgestellt, und der Kanalzugriff, der durch die Einrichtung vor der ersten Zeitdomäneneinheit durchgeführt wird, ist erfolgreich; und die Einrichtung **dadurch gekennzeichnet ist, dass**:

falls sich die erste Zeitdomäneneinheit innerhalb der von einem dritten Endgerät initiierten Kanalbelegungszeit befindet, die Übertragungsbedingung weiter umfasst, dass das dritte Endgerät ein Zielempfänger von Sidelink-Daten zur Übertragung durch die Einrichtung ist;
falls die Übertragungsbedingung erfüllt ist, eine Zielkennung der in der Sidelink-Übertragung übertragenen Sidelink-Steuerinformationen, SCI, anhand eines Diensttyps bestimmt wird, falls die Einrichtung die Sidelink-Übertragung im Broadcast-Modus durchführt, wobei es sich bei dem Diensttyp um einen Dienst handelt, der vom dritten Endgerät empfangen werden soll.

**9.** Einrichtung nach Anspruch 8, wobei die gewährten Übertragungsressourcen mindestens eines umfassen von:

Übertragungsressourcen, die von einer Netzwerkvorrichtung der Einrichtung zugewiesen werden; oder
Übertragungsressourcen, die von der Einrichtung autonom ausgewählt sind.

**10.** Einrichtung nach Anspruch 8, wobei die Kanalzugriffsarten mindestens eines umfassen von: Kanalzugriff Typ 1, Kanalzugriff Typ 2A, Kanalzugriff Typ 2B oder Kanalzugriff Typ 2C;
optional die Einrichtung weiter umfasst: ein Sensormodul (1340), das so konfiguriert ist zum: Durchführen des Kanalzugriffs Typ 2A oder des Kanalzugriffs Typ 2B vor der ersten Zeitdomäneneinheit, falls sich die erste Zeitdomäneneinheit innerhalb der vom dritten Endgerät initiierten Kanalbelegungszeit befindet; und Durchführen des Kanalzugriffs Typ 1 vor der ersten Zeitdomäneneinheit, falls sich die erste Zeitdomäneneinheit nicht innerhalb der vom dritten Endgerät initiierten Kanalbelegungszeit befindet.

11. Einrichtung nach Anspruch 8, wobei das Sidelink-Übertragungsmodul (1320) weiter so konfiguriert ist, dass es veranlasst, dass die Dauer für die Durchführung der Sidelink-Übertragung in der ersten Zeitdomäneneinheit eine erste Dauer nicht überschreitet, falls der Kanalzugriff Kanalzugriff Typ 2C ist.

12. Einrichtung nach Anspruch 8, wobei der erfolgreiche Kanalzugriff Folgendes umfasst: der Kanalzugriff ist unmittelbar vor der Sidelink-Übertragung in der ersten Zeitdomäneneinheit erfolgreich.

13. Einrichtung nach einem der Ansprüche 8 bis 12, wobei falls die Übertragungsbedingung erfüllt ist:

eine Zielkennung der in der Sidelink-Übertragung übertragenen SCI anhand der Identifikationsinformationen des dritten Endgeräts bestimmt wird, falls die Einrichtung die Sidelink-Übertragung im Unicast-Modus durchführt; oder
eine Zielkennung der in der Sidelink-Übertragung übertragenen SCI anhand von Gruppenidentifikationsinformationen bestimmt wird, falls die Einrichtung die Sidelink-Übertragung im Groupcast-Modus durchführt, wobei die Gruppenidentifikationsinformationen eine Kommunikationsgruppe angeben, die die Einrichtung und das dritte Endgerät umfasst.

14. Computerlesbares Speichermedium, das ein oder mehrere Programme speichert, wobei das eine oder die mehreren Programme, wenn sie von einem Prozessor (1401) geladen und ausgeführt werden, den Prozessor (1401) veranlassen, das Verfahren zur Sidelink-Kommunikation nach einem der Ansprüche 1 bis 7 durchzuführen.

**Revendications**

1. Procédé de communication en liaison latérale, applicable à un premier terminal, dans lequel le premier terminal effectue la communication en liaison latérale au moyen d'un spectre sans licence, et le procédé comprend :
la réalisation (902) d'une transmission en liaison latérale dans une première unité de domaine temporel en réponse à la satisfaction d'une condition de transmission, dans lequel la condition de transmission comprend les éléments suivants : le premier terminal est doté de ressources de transmission octroyées dans la première unité de domaine temporel, et un accès au canal effectué par le premier terminal avant la première unité de domaine temporel est réussi ; et le procédé est **caractérisé en ce que** :

dans un cas où la première unité de domaine temporel se situe pendant un temps d'occupation de canal initié par un troisième terminal, la condition de transmission consiste en outre **en ce que** le troisième terminal est un récepteur de destination de données de liaison latérale destinées à une transmission par le premier terminal ; dans un cas où la condition de transmission est remplie, un identifiant de destination d'informations de commande de liaison latérale, SCI, transmises dans la transmission en liaison latérale est déterminé sur la base d'un type de service dans un cas où le premier terminal effectue la transmission en liaison latérale dans un mode de diffusion, dans lequel un service correspondant au type de service est un service devant être reçu par le troisième terminal.

2. Procédé selon la revendication 1, dans lequel les ressources de transmission octroyées comprennent au moins l'une option parmi :

des ressources de transmission attribuées par un dispositif de réseau au premier terminal ; ou
des ressources de transmission sélectionnées de manière autonome par le premier terminal.

3. Procédé selon la revendication 1, dans lequel les types de l'accès au canal comprennent au moins l'un parmi : un accès au canal de Type 1, un accès au canal de Type 2A, un accès au canal de Type 2B, ou un accès au canal de Type 2C.

4. Procédé selon la revendication 3, comprenant en outre :

la réalisation de l'accès au canal de Type 2A ou l'accès au canal de Type 2B avant la première unité de domaine temporel dans un cas où la première unité de domaine temporel se situe pendant un temps d'occupation de canal initié par le troisième terminal; et

la réalisation de l'accès au canal de Type 1 avant la première unité de domaine temporel dans le cas où la première unité de domaine temporel ne se situe pas pendant le temps d'occupation de canal initié par le troisième terminal.

5. Procédé selon la revendication 1, dans lequel une durée permettant d'effectuer la transmission en liaison latérale dans la première unité de domaine temporel au moyen du premier terminal n'est pas supérieure à une première durée dans un cas où l'accès au canal est un accès au canal de Type 2C.

6. Procédé selon la revendication 1, dans lequel la réussite de l'accès au canal consiste en ce que :
un accès au canal immédiatement avant la transmission en liaison latérale dans la première unité de domaine temporel est réussi.

7. Procédé selon l'une quelconque des revendications 1 à 6, dans lequel dans un cas où la condition de transmission est remplie :

un identifiant de destination de SCI transmises pendant la transmission en liaison latérale est déterminé sur la base d'informations d'identification du troisième terminal dans un cas où le premier terminal effectue la transmission en liaison latérale dans un mode de monodiffusion ; ou

un identifiant de destination de SCI transmises pendant la transmission en liaison latérale est déterminé sur la base d'informations d'identification de groupe dans un cas où le premier terminal effectue la transmission en liaison latérale dans un mode de diffusion groupée, dans lequel les informations d'identification de groupe indiquent un groupe de communication comprenant le premier terminal et le troisième terminal.

8. Appareil de communication en liaison latérale, comprenant :
un module de transmission en liaison latérale (1320), configuré pour effectuer une transmission en liaison latérale dans une première unité de domaine temporel en réponse à la satisfaction d'une condition de transmission, dans lequel la condition de transmission comprend les éléments suivants : l'appareil est doté de ressources de transmission octroyées dans la première unité de domaine temporel, et un accès au canal effectué par l'appareil avant la première unité de domaine temporel est réussi ; et l'appareil est **caractérisé en ce que** :

dans un cas où la première unité de domaine temporel se situe pendant un temps d'occupation de canal initié par un troisième terminal, la condition de transmission comprend en outre le fait que le troisième terminal est un récepteur de destination de données de liaison latérale destinées à une transmission par l'appareil ;

dans un cas où la condition de transmission est satisfaite, un identifiant de destination d'informations de commande de liaison latérale, SCI, transmises dans la transmission en liaison latérale est déterminé sur la base d'un type de service dans le cas où l'appareil effectue la transmission en liaison latérale dans un mode de diffusion, dans lequel un service correspondant au type de service est un service devant être reçu par le troisième terminal.

9. Appareil selon la revendication 8, dans lequel les ressources de transmission octroyées comprennent au moins l'une option parmi :

des ressources de transmission attribuées par un dispositif de réseau à l'appareil ; ou
des ressources de transmission sélectionnées de manière autonome par l'appareil.

10. Appareil selon la revendication 8, dans lequel les types de l'accès au canal comprennent au moins l'un parmi : un accès au canal de Type 1, un accès au canal de Type 2A, un accès au canal de Type 2B, ou un accès au canal de Type 2C.
facultativement, l'appareil comprend en outre : un module de détection (1340), configuré pour : effectuer l'accès au canal de Type 2A ou l'accès au canal de Type 2B avant la première unité de domaine temporel dans un cas où la première unité de domaine temporel se situe dans un temps d'occupation de canal initié par le troisième terminal ; et effectuer l'accès au canal de Type 1 avant la première unité de domaine temporel dans un cas où la première unité de domaine temporel ne se situe pas dans le temps d'occupation de canal initié par le troisième terminal.

11. Appareil selon la revendication 8, dans lequel le module de transmission en liaison latérale (1320) est en outre configuré pour rendre une durée permettant d'effectuer la transmission en liaison latérale dans la première unité de domaine temporel inférieure ou égale à une première durée dans un cas où l'accès au canal est un accès au canal de Type 2C.

**12.** Appareil selon la revendication 8, dans lequel la réussite de l'accès au canal consiste en ce que : un accès au canal immédiatement avant la transmission en liaison latérale dans la première unité de domaine temporel est réussi.

**13.** Appareil selon l'une quelconque des revendications 8 à 12, dans lequel dans un cas où la condition de transmission est satisfaite :

un identifiant de destination de SCI transmises pendant la transmission en liaison latérale est déterminé sur la base d'informations d'identification du troisième terminal dans un cas où l'appareil effectue la transmission en liaison latérale dans un mode de monodiffusion ; ou
un identifiant de destination de SCI transmises pendant la transmission en liaison latérale est déterminé sur la base d'informations d'identification de groupe dans un cas où l'appareil effectue la transmission en liaison latérale dans un mode de diffusion groupée, dans lequel les informations d'identification de groupe indiquent un groupe de communication comprenant l'appareil et le troisième terminal.

**14.** Support de stockage lisible par ordinateur, stockant un ou plusieurs programmes, dans lequel les un ou plusieurs programmes, lorsqu'ils sont chargés et exécutés par un processeur (1401), amènent le processeur (1401) à exécuter le procédé de communication en liaison latérale selon l'une quelconque des revendications 1 à 7.

FIG. 1

FIG. 2

14

131

132

Sidelink
communication

FIG. 3

13

13

Sidelink
communication

FIG. 4

13

Resource
allocation

Resource
allocation

13

13

Sidelink
transmission

FIG. 5

(a)

| AGC | | | | | | PSSCH | | | | | | | GP |
|-----|---|---|---|---|---|---|---|---|---|---|---|---|---|
| | PSCCH | | | | | | | | | | | | |
| 0 | 1 | 2 | 3 | 4 | 5 | 6 | 7 | 8 | 9 | 10 | 11 | 12 | 13 |

(b)

| AGC | | | | | | PSSCH | | | | | GP | PSFCH | GP |
|-----|---|---|---|---|---|---|---|---|---|---|---|---|---|
| | PSCCH | | | | | | | | | | | | |
| 0 | 1 | 2 | 3 | 4 | 5 | 6 | 7 | 8 | 9 | 10 | 11 | 12 | 13 |

FIG. 6

Station-acquired COT

Gap < 16us

(a)

Station-acquired COT

Gap > 16us

(b)

Station-acquired COT

Gap ≤ 25us

(c)

Time-domain

DL UL Cat-2 LBT Cat-4 LBT

FIG. 7

Radio frame 2n ← → Radio frame 2n+1

FFP FFP FFP FFP FFP

COT COT COT COT COT

$T_z$

$T_y$=3.8ms

Idle duration

$T_x$=4ms

FIG. 8

First terminal performing sidelink transmission in a first time-domain unit in response to a transmission condition being satisfied

902

FIG. 9

First time-domain unit

■ LBT

FIG. 10

First slot

■ LBT    ▨ First time-domain unit

FIG. 11

Radio frame 2n

Radio frame 2n+1

FFP

FFP

FFP

FFP

FFP

COT

COT

COT

COT

COT

$T_z$=0.2ms

$T_y$=3.8ms

$T_x$=4ms

Idle duration

1ms

1ms

1ms

1ms

Slot n

Slot n+1

Slot n+2

Slot n+3

0.2ms

FIG. 12

| Sidelink transmission module | 1320 |
| Sensing module | 1340 |

FIG. 13

| Processor | 1401 | | Transmitter | 1403 |
| | | | | 1405 |

Bus

| | 1402 | | | 1404 |
| Receiver | | | Memory | |

FIG. 14

**REFERENCES CITED IN THE DESCRIPTION**

**Patent documents cited in the description**

- WO 2021081700 A1
- WO 2021088028 A1